# EUROPEAN PATENT SPECIFICATION

(11) **EP 1 338 671 B1**
(45) Date of publication and mention of the grant of the patent: **06.04.2011**
(21) Application number: 02003984.8
(22) Date of filing: 22.02.2002
(51) Int. Cl.: C23C 4/12, C23C 4/10, C01B 13/02, B01D 71/02, B01D 53/22, B05B 7/20, C04B 35/01, H01M 8/02

(54) **Plasma sprayed oxygen transport membrane coatings**
Durch Plasmaspritzen aufgebrachten Membranbeschichtungen für den Sauerstofftransport
Revetements de membrane pour le transport d'oxygene déposées par jet de plasma

(43) Date of publication of application: 27.08.2003
(73) Proprietor: PRAXAIR TECHNOLOGY, INC., Danbury, CT 06810-5113 (US)
(72) Inventor: Chen, Jack Chieh-Cheng, Engineer, Getzville, New York 14068 (US); Chen, Hancun, Engineer, Williamsville, New York 14221 (US); Prasad, Ravi, Engineer, East Amherst, New York 14051 (US); Whichard, Glenn, Engineer, Centerville, Virginia 20120 (US)
(74) Representative: Schwan - Schwan - Schorer

(56) References cited:
- EP-A- 0 974 564
- DE-A- 3 806 174
- US-A- 5 391 440
- US-A- 5 478 444
- US-B1- 6 235 187
- PATENT ABSTRACTS OF JAPAN vol. 0161, no. 18 (C-0922), 25 March 1992 (1992-03-25) & JP 03 287754 A (TOYONOBU YOSHIDA), 18 December 1991 (1991-12-18)
- DATABASE WPI Week 199336 Derwent Publications Ltd., London, GB; AN 1993-285668 XP002208765 & JP 05 202460 A (ONODA CEMENT CO LTD), 10 August 1993 (1993-08-10)

## Description

### FIELD OF THE INVENTION

This invention relates generally to oxygen or hydrogen transport membranes, and more specifically to oxygen or hydrogen transport membranes fabricated by plasma spray deposition of small particles of ceramic, or metal, or a combination thereof, in order to provide a micro-crack-free coating on a substrate. Also disclosed is a multi-layer composite comprising a dense or porous substrate coated with a coating provided by supersonic plasma spray deposition. Also disclosed is subsonic plasma spray deposition of single phase or dual phase nanocrystalline particles of ceramic or metal, or a combination thereof, to form a crack-free oxygen transport membrane on a substrate.

### U.S. GOVERNMENT RIGHTS

The U.S. Government has a paid-up license in this invention and the right in limited circumstances to require the patent owner to license others on reasonable terms as provided for by the terms of Cooperative Agreement No. 70NANB5H1065 awarded by the National Institute of Standards and Technology.

### BACKGROUND OF THE INVENTION

Oxygen transport membranes ("OTMs") are useful for separating oxygen from gas mixtures containing oxygen, and the OTMs desirably are fabricated using a mixed conductor ceramic membrane, and the resulting membrane desirably has high oxygen selectivity. Illustrative ceramic compositions are disclosed in U.S. Patent Nos. 5,342,431 (Anderson et al.); 5,648,304 (Mazanec et al.); 5,702,999 (Mazanec et al.); 5,712,220 (Carolan et al.); and 5,733,435 (Prasad et al.). In analogous fashion, other selective ion-transport membranes, such as hydrogen transport membranes ("HTMs") are suitably fabricated to selectively permit hydrogen to pass through the membrane while not allowing other ions to pass.

Thus, the OTMs possess the characteristic of "oxygen selectivity", meaning that only oxygen ions are transported across the membrane, with the exclusion of other elements and ions. Likewise, the HTMs possess the characteristic of "hydrogen selectivity", meaning that only hydrogen ions are transported across the membrane, with the exclusion of other elements and ions. The OTM's and HTMs can be fabricated from ceramics, or metals, or a combination thereof. Suitable ceramics for use as the membrane material include single phase mixed conductor perovskites and dual phase metal/metal oxide combinations. Particularly advantageous solid electrolyte ceramic membranes are made from inorganic oxides, typically containing calcium- or yttrium-stabilized zirconium or analogous oxides having a fluorite or perovskite structure. Exemplary ceramic compositions are disclosed in U.S. Patent Nos. 5,702,959 to Mazanec et al.; 5,712,220 to Carolan et al.; and 5,733,435 to Prasad et al.. The use of such membranes in gas purification applications is described in U.S. Patent No. 5,733,069 to Prasad et al.. Particularly effective OTMs comprise dense films of perovskite-type oxides on porous substrates since these OTMs are particularly good mixed conductors. For example, a computer-simulated model of an OTM having both a dense layer and a contiguous porous layer, wherein the dense layer is said to have no connected through porosity, is disclosed in U.S. Patent 5,240,480 to Thorogood et al. Multilayer OTM composites having, for example, a porous layer and a contiguous denser layer, can have advantageous properties including enhanced oxygen selectivity.

Thin film coatings of oxygen transport membranes, such as the perovskites, are particularly desirable because the ideal oxygen flux is inversely proportional to the thickness of the membrane. On this basis, a thin film is preferred since it permits higher oxygen fluxes and reduced surface area, as compared to thicker films, thus resulting in lower membrane operating temperatures and smaller oxygen pressure differentials across the electrolyte during operation of the membrane.

Heretofore, several techniques have been described for fabricating dense OTM coatings, including chemical vapor deposition, electrostatic spray depositions, electrochemical vapor deposition, sputtering, spray pyrolysis, sol-gel thin film processing, and laser ablation. By way of illustration, a technical journal article by Y. Teraoka et al entitled "Preparation of Dense Film of Perovskite-Type Oxide on Porous Substrate", appearing in Nippon Seramkkusu Kyokai Gakiyutsu Ronbunshi (Japanese Version) Volume 97, November 5, 1989 compared sputtering with suspension spray deposition, and concluded that the sputtering process produced a lot of cracks, resulting in a failure to form dense films, whereas improved dense films were formed using the suspension spray deposition technique.

As another illustration, U.S. Patent 5,439,706 to Richards et al discloses a method for manufacturing OTMs using organometallic chemical vapor deposition. Nonetheless, although chemical vapor deposition processes are suitably employed to produce dense, gas-tight ceramic thin films, these processes have the disadvantages of being time consuming, requiring expensive processing equipment, and typically employing toxic precursor chemicals. Further, stoichiometry control for purposes of the formation of the oxide film is difficult to maintain using these processes. The physical deposition processes, such as sputtering and laser ablation, also have distinct disadvantages, since they are typically complex processes, often requiring vacuum systems, and typically employing low deposition rates that don't lend themselves to use for commercial production of OTMs.

Yet another alternative is thermal spraying. Thermal spraying involves spraying a molten powder of metal or metal oxide onto the surface of a substrate using a plasma or thermal spray gun. In short, it is a heat and momentum-related process involving energy transfer that is attributable to enthalpy and velocity, and the resulting spray coating on a substrate provides strong mechanical bonding of the coating to the substrate without undesirable overheating in view of very short processing times. Thermal spraying processes include plasma spraying and high velocity oxygen fuel ("HVOF") spraying.

Heretofore, plasma spraying has been disclosed for use in fabricating dense lanthanum chromite interconnectors for solid oxide fuel cell applications. Unfortunately, the resulting coating typically is porous and contains significant numbers of microcracks, necessitating a subsequent heat-treating step at temperatures of from 1450 to 1550 degrees Centigrade in order to provide the desired dense, microcrack-free coating. Illustrative of the use of plasma deposition in the preparation of electrically conductive interconnection layers on an electrode structure of an electrochemical cell are the disclosures provided in U.S. Patent 5,391,440 to Kuo et al. There are several disadvantages associated with the invention disclosed in Kuo et al., namely (1) the sub-sonic plasma spraying step provides a coating on the electrode substrate that contains unwanted microcracks, (2) the plasma spray requires the use of a "flux" or "liquid phase former" that risks introducing unwanted elements into the coating, and (3) a post-spraying heat-treating step is required to "heal" the resulting microcracks.

Heretofore there has been no disclosure of the use of plasma deposition methodology of any kind, much less supersonic plasma deposition, in the preparation of dense, microcrack-free coatings, for use as oxygen transport membranes, without a post plasma spraying heat treating step, to the knowledge of the present inventors. In addition, there has been no disclosure of the use of supersonic plasma deposition to provide microcrack-free thermal barrier or interconnector coatings. Further, there has been no disclosure of the use of subsonic plasma spraying of nanocrystalline particles to produce such microcrack-free coatings.

Fast, cost-effective methods are needed for fabricating dense, thin-film, gas-tight oxygen or hydrogen transport membrane coatings, that are free of microcracks, on dense or porous substrates. The present invention provides one such method for fabricating these OTMs and HTMs using supersonic, sonic or subsonic speed plasma spraying to provide the desired coating.

### SUMMARY OF THE INVENTION

The present invention relates to a method for fabricating a mixed ionic and electronic conducting membrane layer as it is defined in claim 1.

### BRIEF DESCRIPTION OF THE DRAWINGS

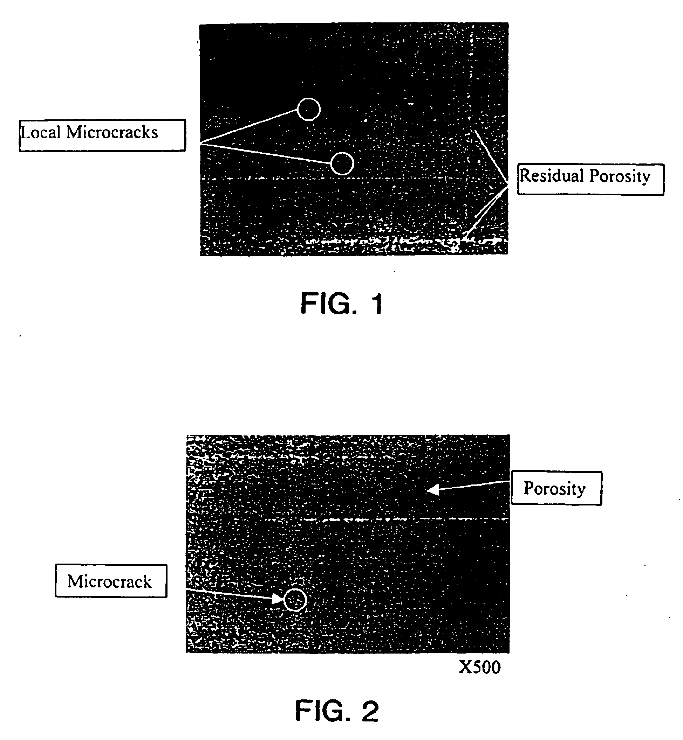

Figure 1 is a cross-sectional photomicrograph representation at 500X magnification of a LSFCM coating deposited on a stainless steel substrate by subsonic plasma spraying in accordance with Example 1. This photomicrograph representation depicts a 250 µm thick, dense, uniform coating having localized residual porosity and localized microcracks.
Figure 2 is a cross-sectional photomicrograph representation at 500X magnification of a LSFCM coating deposited on a stainless steel substrate in accordance with Example 2. This photomicrograph representation depicts a 350 µm thick, dense, uniform coating having reduced porosity and a minimal number of microcracks, as compared to the coating of Example 1.

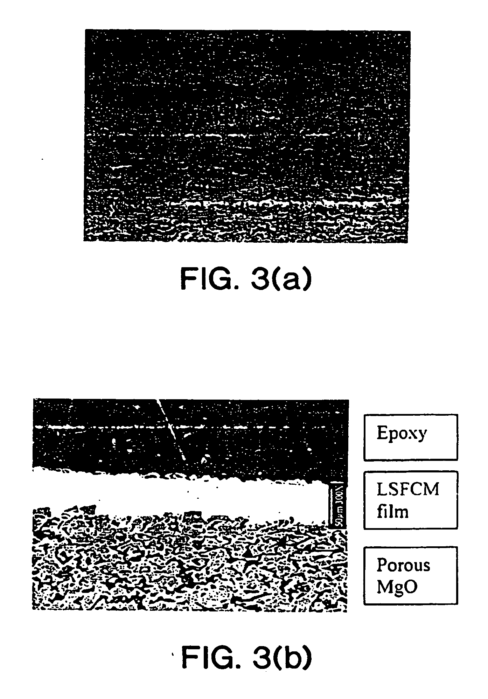

Figure 3a is a cross-sectional photomicrograph representation at 500X magnification of a LSFCM coating deposited by a Mach II plasma spraying on a stainless steel oxide substrate in accordance with Example 3. This photomicrograph representation depicts an approximately 240 µm thick, highly dense, and crack-free uniform coating as compared to the coating of Example 1.
Figure 3b is a cross-sectional scanning electron microscopy ("SEM") representation of a LSFCM coating deposited by a Mach II plasma spraying on a porous magnesium oxide substrate in accordance with Example 3. This SEM representation depicts an approximately 50 µm thick, highly dense, uniform and crack-free LSFCM coating as compared to the coating of Example 1.

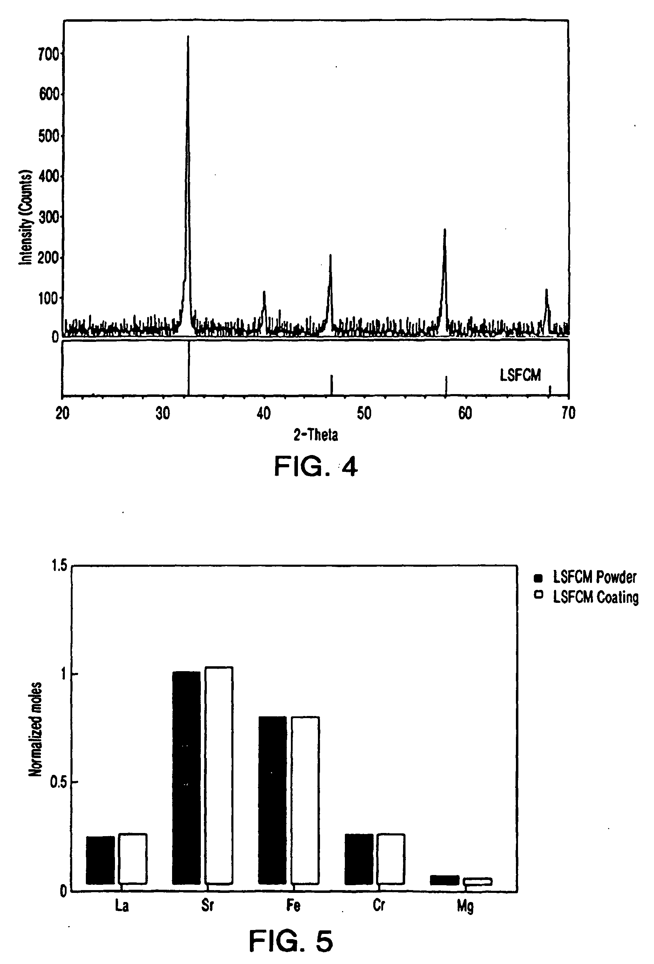

Figure 4 is an x-ray diffraction ("XRD") representation of the LSFCM coating of Example 3 showing that the coating is in the form of a single phase perovskite.
Figure 5 is a graphical representation of a compositional comparison between the LSFCM coating of Example 3 with comparison LSFCM powder demonstrating that the coating and the powder are compositionally identical.

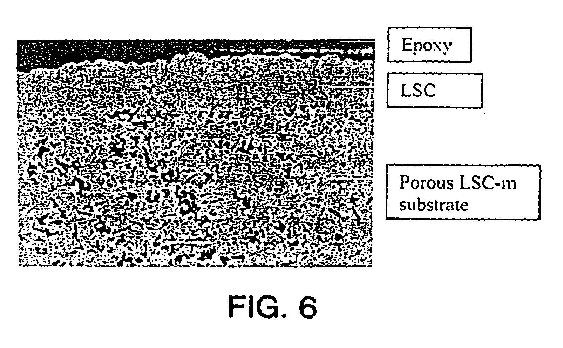

Figure 6 is a cross-sectional scanning electron microscopy ("SEM") representation of a LSFCM coating deposited by a Mach II plasma spraying on a porous LSCM substrate in accordance with Example 4. This SEM representation depicts an approximately 50 µm thick, dense, crack-free, uniform LSFCM coating.

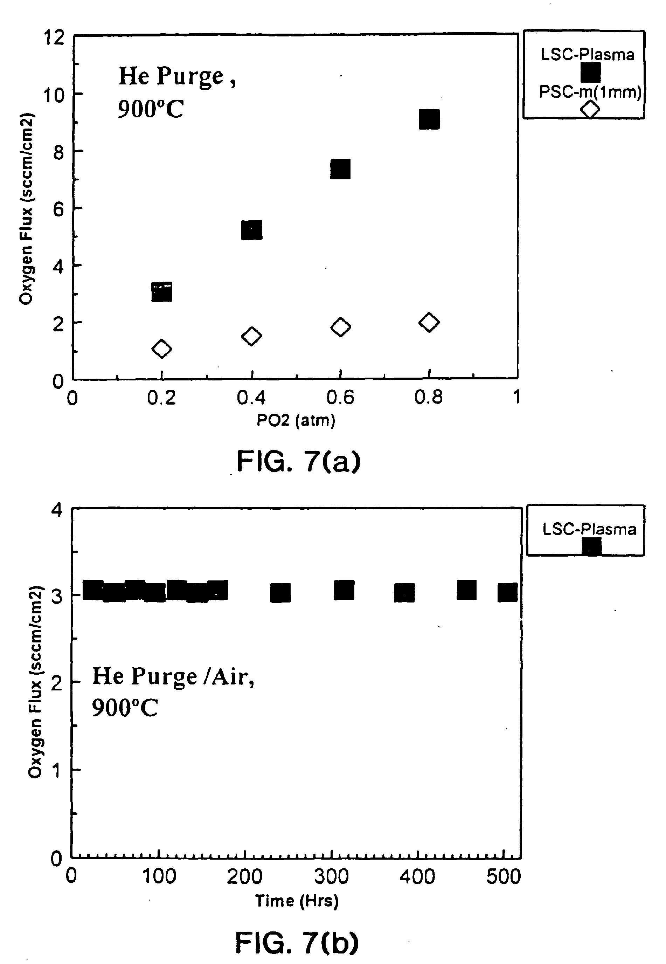

Figure 7 is a graphical representation of the product of Example 5 showing flux performance and the stability of a Mach II plasma spraying LSC composite disc at 900 degrees Centigrade using air as a feed gas.

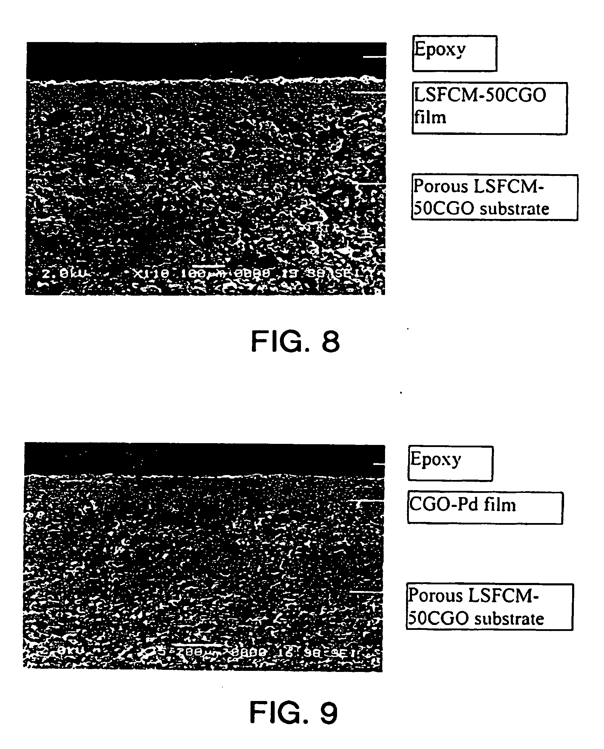

Figure 8 is a cross-sectional scanning electron microscopy ("SEM") representation of a LSFCM-50CGO coating deposited by Mach II plasma spraying on a porous LSFCM-50CGO substrate in accordance with Example 5. This SEM representation depicts an approximately 100 µm thick, dense, crack-free, uniform LSFCM-50CGO coating having both LSFCM and CGO deposits uniformly distributed throughout the coating.
Figure 9 is a cross-sectional scanning electron microscopy ("SEM") representation of a CGO-Pd coating deposited by Mach II plasma spraying of a mixture of CGO and 40 weight percent of palladium on a porous LSFCM-50CGO substrate in accordance with Example 6. This SEM representation depicts an approximately 200 µm thick, dense, crack-free uniform CGO-Pd coating on the porous LSFCM-50CGO substrate.

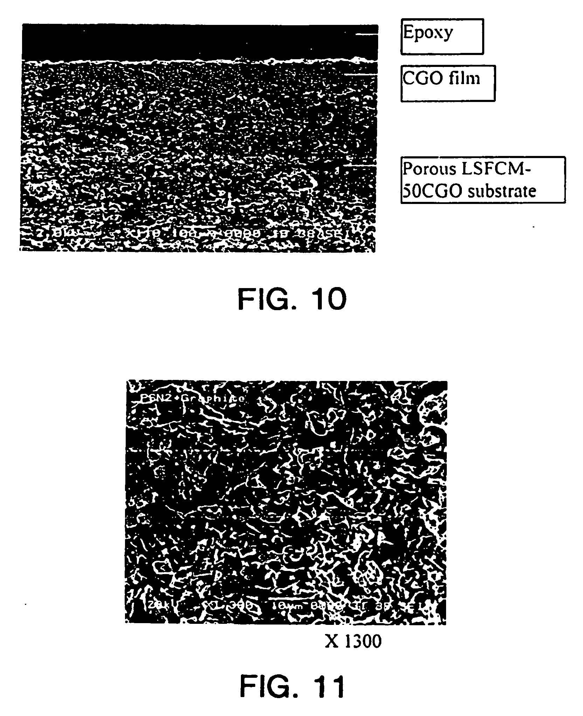

Figure 10 is a cross-sectional scanning electron microscopy ("SEM") representation of a CGO coating deposited by subsonic plasma spraying of a mixture of CGO on a porous LSFCM-50CGO substrate in accordance with Example 7 (not part of the invention). This SEM representation depicts an approximately 100 µm thick, dense, crack-free uniform CGO coating on the porous LSFCM-50CGO substrate.
Figure 11 is a cross-sectional photomicrograph representation at 500X magnification of a LSFCM coating deposited by subsonic plasma spraying on a LSFCM-m (consisting of LSFCM plus 20 wt. percent of Pd/Ag) substrate in accordance with Example 8 (not part of the invention). This photomicrograph representation depicts a 200 µm thick, porous coating having a porosity of greater than 30 percent and a pore size of greater than 10 µm.

### DETAILED DESCRIPTION OF INVENTION

It has now been surprisingly found by the present inventors that supersonic plasma spraying, using spray modes in the Mach I to Mach II range, are suitably employed to fabricate OTMs and HTMs comprising a uniform, dense, essentially microcrack-free coating of a ceramic, or metal, or combination thereof, composition on a porous or dense substrate. The method of the present invention is particularly useful in the rapid, cost-effective fabrication of OTMs and HTMs based upon thin plasma sprayed coatings. These thin coatings afford particular advantage during use of the OTM since it is axiomatic that the ideal oxygen flux is inversely proportional to the thickness of the membrane. Thus, OTMs produced using plasma spray fabrication in accordance with the present invention will provide advantages in both production and use. During use, the thin coatings made in accordance with the present invention enable operation of the OTM using higher oxygen fluxes, reduced membrane areas, lower membrane operating temperatures, and smaller oxygen partial pressure differentials across the electrolyte, as compared to conventionally produced OTMs.

Ceramic coatings useful in the present invention are suitably formed from an inorganic oxide, typified by calcium- or yttrium- stabilized zirconia or analogous oxides having a fluorite or perovskite structure. The OTM, fabricated by plasma deposition of a ceramic coating onto a suitable substrate, advantageously have a nominal coating thickness of under 500 µm, preferably less than 300 µm thick, more preferably less than 100 µm thick. The OTM is useful for transporting oxygen ions and electrons at the prevailing oxygen partial pressure in the temperature range of from 450°C to about 1200°C when an oxygen chemical potential difference is maintained across the ion transport membrane surface caused by maintaining a positive ratio of oxygen partial pressures across the ion transport membrane. OTM's oxygen ion conductivity is typically in the range of between 0.01 and 100 S/cm where S is reciprocal ohms (1/ohms).

Suitable ceramic materials for fabricating OTMs in accordance with the present invention include perovskites and dual phase metal/metal oxide combinations as listed in Table 1. Illustrative perovskites include La₁₋ₓSrₓCOO_{3-y}, LaₓSr₁₋ₓFeO_{3-y}, and LaₓSr₁₋ₓFe_{1-y}CO_{y}O_{3-z}. Since the reactive environment on the anode side of the oxygen-selective ion transport membrane, in many applications, creates very low partial oxygen pressures, the chromium-containing perovskites listed in Table 1 may be preferred materials since these tend to be stable in the low partial oxygen pressure environment. The chromium-containing perovskites are not typically decomposed at very low oxygen partial pressures.

In fabricating OTMs in accordance with the method of the present invention, the plasma sprayed coating can be composed of the same composition as the underlying substrate, or it can be fabricated from a different material. By way of example, an OTM is suitably prepared by plasma spraying a dense perovskite coating onto a porous perovskite substrate that is compositionally identical to that of the coating. Alternatively, the coating and the substrate can be compositionally different, as illustrated by the various substrate/coating combinations described in the working examples hereinbelow. In any event, the plasma sprayed coating enhances the oxygen surface exchange of the OTM. Compositionally, the ceramic powder used in the plasma spray method of this invention can be employed to provide a compositionally-identical single-phase ceramic coating, as illustrated by Example 3 presented hereinbelow.

**Table I: Mixed Conducting Solid Electrolytes**

| | Material Composition | | |
|---|---|---|---|
| 1. | (La₁₋ₓSrₓ) (Co_{1-y}Fe_{y})O_{3-δ}(0_{3-δ}(0≤x≤1, 0≤y≤1, δ from stoichiometry) | | |
| 2. | SrMnO_{3-δ} (δ from stoichiometry) SrMn_{1-y}Co_{y}O_{3-δ} (0≤y≤1, δ from stoichiometry) Sr₁₋ₓNaₓMnO_{3-δ} (0≤x≤1, δ from stoichiometry) | | |
| 3. | BaFe_{0.5}Co_{0.5}YO₃ SrCeO₃ YBa₂Cu₃O_{7-δ} (0<δ<1, δ from stoichiometry) | | |
| 4. | La_{0.2}Ba_{0.8}Co_{0.8}Fe_{0.2}O_{2.6}; Pr_{0.2}Ba_{0.8}Co_{0.8}Fe_{0.2}O_{2.6} | | |
| 5. | AₓA' _{x'}A" _{x"}B_{y}B' _{y'}B" _{y"}O_{3-δ} (x, x' ,x" ,y,y' ,y" all in 0-1 range) Where: A,A',A" = from groups 1,2,3 and f-block lanthanides B,B',B" = from d-block transition metals δ from stoichiometry | | |
| 6. | (a) Co-La-Bi type: | Cobalt oxide | 15-75 mole % |
| | | Lanthanum oxide | 13-45 mole % |
| | | Bismuth oxide | 17-50 mole % |
| | (b) Co-Sr-Ce type: | Cobalt oxide | 15-40 mole % |
| | | Strontium oxide | 40-55 mole % |
| | | Cerium oxide | 15-40 mole % |
| | (c) Co-Sr-Bi type: | Cobalt oxide | 10-40 mole % |
| | | Strontium oxide | 5-50 mole % |
| | | Bismuth oxide | 35-70 mole % |
| | (d) Co-La-Ce type: | Cobalt oxide | 10-40 mole % |
| | | Lanthanum oxide | 10-40 mole % |
| | | Cerium oxide | 30-70 mole % |
| | (e) Co-La-Sr-Bi type: | Cobalt oxide | 15-70 mole % |
| | | Lanthanum oxide | 1-40 mole % |
| | | Strontium oxide | 1-40 mole % |
| | | Bismuth oxide | 25-50 mole % |
| | (f) Co-La-Sr-Ce type: | Cobalt oxide | 10-40 mole % |
| | | Lanthanum oxide | 1-35 mole % |
| | | Strontium oxide | 1-35 mole % |
| | | Cerium oxide | 30-70 mole % |
| 7. | Bi_{2-x-y}M' ₓM_{y}O_{3-δ}(0≤X≤1, 0≤y≤1, δ from stoichiometry) Where: M'=Er, Y, Tm, Yb, Tb, Lu, Nd, Sm, Dy, Sr, Hf, Th, Ta, Nb, Pb Sn, In, Ca, Sr, La and mixtures thereof M = Mn Fe, Co, Ni, Cu and mixtures thereof | | |
| 8. | BaCe₁₋ₓGdₓO₃₋ₓ/₂ where, x equals from zero to about 1. | | |
| 9. | One of the materials of AₛA' ₜBᵤB' ᵥB" _{w}Oₓ family whose composition is disclosed in U.S. Patent 5,306,411 (Mazanec *et al.)* as follows: A represents a lanthanide or Y, or a mixture thereof; A' represents an alkaline earth metal or a mixture thereof; B represents Fe; B' represents Cr or Ti, or a mixture thereof; B" represents Mn, Co, V, Ni or Cu, or a mixture thereof; And s,t,u,v,w, and x are numbers such that: s/t equals from about 0.01 to about 100; u equals from about 0.01 to about 1; v equals from zero to about 1; w equals from zero to about 1; | | |
| | x equals a number that satisfies the valences of the A, A', B, B', B" in the formula; and 0.9 < (s+t) / (u+v+w)<1.1 | | |
| 10. | One of the materials of La₁₋ₓSrₓCu_{1-y}M_{y}O₃₋ family, where: M represents Fe or Co; x equals from zero to about 1; y equals from zero to about 1; δ equals a number that satisfies the valences of La, Sr, Cu, and M in the formula | | |
| 11. | One of the materials of Ce₁₋ₓAₓO_{2-δ} family, where: A represents a lanthanide, Ru, or Y; or a mixture thereof; x equals from zero to about 1; δ equals a number that satisfies the valences of Ce and A in the formula | | |
| 12. | One of the materials of Sr₁₋ₓBiₓFeO_{3-δ} family, where: A represents a lanthanide, or Y, or a mixture thereof; x equals from zero to about 1; δ equals a number that satisfies the valences of Ce and A in the formula | | |
| 13. | One of the materials of SrₓFe_{y}CO_{z}O _{3-δ} family, where: x equals from zero to about 1; y equals from zero to about 1; δ equals a number that satisfies the valences of Sr, Bi and Fe in the formula | | |
| 14. | Dual phase mixed conductors (electronic/ionic): (Pd)_{0.5}/ (YSZ)_{0.5} (Pt)_{o.5}/(YSZ)ₒ.₅ (LaCr_{1-y}Mg_{y}O_{3-δ})_{0.5}(YSZ)_{0.5} (In_{90%}Pt_{10%})_{0.6}/ (YSZ)_{0.5} (In_{90%}Pt_{10%})_{0.5} /(YSZ) _{0.5} (In_{95%}Pr_{2.5%}Zr_{2.5%})_{0.5}/(YSZ)_{0.5} Any of the materials described in 1-13, to which a high temperature metallic phase (e.g, Pd, Pt, Ag, Au, Ti, Ta, W) is added | | |
| 15. | One of the materials of A_{2-X}A' xB_{2-y}B' _{y}O_{5+z} family whose composition is disclosed in WO 97/41060 (Schwartz et *al.)* as follows: A represents an alkaline earth metal or a mixture thereof; A' represents a lanthanide or Y, or a mixture thereof; B represents a metal ion or mixtures of 3d transition metal ions and group 13 metals; B' represents a metal ion or mixtures of 3d transition metal ions and group 13 metals, the lanthanides and yttrium; 0<x<2; 0<y<2; z renders the compound charge neutral | | |
| 16. | One of the materials of LnₓA'ₓCo_{y}Fe _{y}'Cu _{y}' 'O_{3-z} family whose composition is disclosed in EP 0 732 305 A1 (Dyer et *al.)* as follows: Ln represents a f block lanthanide; A' represents Sr or Ca; x>0, y>0, x+x' =1, y+y' +y"=1, 0<y≤0.4 z renders the compound charge neutral | | |
| 17. | One of the materials of LnₓA' _{x'}A' '_{x' '}B_{y}B' _{y'}B' 'y_{''}O_{3-z} O_{3-z} family whose composition is disclosed in EP 0 931 | | |
| | 763 Al (Dyer et *al.)* as follows: Ln represents a f block lanthanide; A' from groups 2; A' ' from groups 1, 2, 3 and f-block lanthanides B, B' from d-block transition metals excluding Ti and Cr 0≤x<1, 0<x' ≤1, 0<y<1.1, 0≤y'<1.1, x+x' +x"=1.0, 1.1>y+y'>1.0, z renders the compound charge neutral | | |

Other solid electrolyte materials, besides those listed in Table I above, are within the scope of the present invention, such as zirconia, ceria, bismuth oxides, and lanthanum gallate. Likewise, interconnector materials, including lanthanum chromite, lanthanum maganite, are suitably employed for fabricating solid oxide fuel cell and electrically-driven oxygen generator applications.

Clearly, the present invention has wide application to a wide variety of industrial uses. Illustratively, the following specific applications are envisioned for the coatings made in accordance with the present invention: (1) single phase mixed conducting oxides (e.g. perovskites) for oxygen or hydrogen transport membrane applications, (2) single phase ionic conductor solid electrolyte (e.g., fluorites) for solid oxide fuel cell and electrically driven oxygen generator applications, (3) dual phase mixed conductors with a ceramic second phase, (4) dual phase mixed conductors with a metallic second phase, and (5) single phase electronic conducting oxides (e.g., perovskites) for use in solid oxide fuel cell or as an interconnection layer on an electrode structure of an electrochemical cell.

The method of the present invention preferably employs plasma spray methodology, but alternatively can use high velocity oxygen fuel (HVOF) thermal spray. As an illustration of the plasma spray use, the fabrication of a dense, gas tight ceramic OTM or HTM coating is suitably effected by plasma spray deposition onto a porous substrate using the method of this invention. The plasma spraying is suitably carried out using fine agglomerated sizes of ceramic powder, typically having an average agglomerated particle size of less than 40 µm, preferably less than 30 µm, most preferably in the range of 15-25 µm. As another illustration, a porous La_{.2}Sr_{.8}Fe_{.79}Cr.₂Mg_{.01}O₃ (LSFCM) coating deposited on a porous LSFCM-m substrate, as described in more detail in Example 8 (not part of the invention) hereinbelow. Individual particles useful in preparing the agglomerates typically range in size from nanocrystalline size to an upper limit of about 1 µm in size, and the nanocrystalline size is employed when plasma spray at subsonic speeds is used.

In fabricating porous coatings using the method of the present invention, a wide range of pore sizes and porosities are obtainable. Thus, although a porosity of more than 30% with a pore size of up to 10 µm was obtained for the LSFCM coating described in Example 8, the spray conditions and the pore former are suitably modified to provide a porosity greater than 50% and a pore size of greater than 50 µm for the porous coating.

Examples 1-8 described hereinbelow describe in more detail the particulars of the plasma medium (i.e., an inert gas), plasma torch (or plasma gun or arc) and power used, the powder utilized with the plasma medium, and the plasma torch manipulation employed in the examples. Briefly, the powder particles are admixed with the plasma medium. The plasma medium-added particle spray powder mixture or plasma spray feed powder is agglomerated prior to thermal spraying by well-known agglomeration techniques to provide a free-flowing plasma spray feed powder. The plasma medium-added spray ceramic metal and/or metal oxide particle mixture is thus agglomerated in order to facilitate entrainment in a plasma plume generated by a plasma torch or spray gun utilized. As another alternative, plasma arc spraying can be used in the method of the present invention. Preferably, the plasma spray feed powder has a uniform agglomerated particle size distribution with an average particle size in the range of 5 to 80 µm, more preferably 10 to 25 µm.

The following examples are intended to illustrate, but in no way limit the scope of, the present invention.

### EXAMPLES

### EXAMPLE 1 (Comparative Example) - Deposition of La.₂Sr_{.8}Fe_{.79}Cr_{.2}Mg_{.01}O₃ (LSFCM) coating by subsonic plasma spraying

The LSFCM coating was prepared by subsonic-mode plasma spraying on a stainless steel substrate. The sprayed-dried LSFCM powder was fed into the plasma spray gun vertically via Ar carrier gas through a Praxair powder feeder. A subsonic mode of plasma spraying was set up as follows:

### Plasma medium:

40 slm Ar with 21 slm He, where slm is standard liters per minutes.

### Plasma torch and power:

Subsonic mode of Praxair SG-100 plasma torch with a power of 900 amps, 29 volts and 26 Kilowatts.

### Powder and feed:

LSFCM powder (20 µm agglomerates) is prepared by Praxair Specialty Ceramics, Inc. Powder was fed at 10 mm upstream from the torch exit with 4 slm Ar carrier gas at 30 psi and with a 3.0 rpm setting of Praxair powder feeder (equals approximately to 18 grams/minute feed rate).

### Torch manipulation:

40 passes at a scan of 500 mm/second in a 3 mm step ladder pattern horizontal to the substrate and at a distance of 75 mm from the substrate. The ladder pattern is repeated composed of left to right and right to left torch movements with a 3 mm step between the lines of opposite movement.

Figure 1 shows a cross-sectional photomicrograph of a LSFCM film deposited on a stainless steel substrate by conventional subsonic plasma spraying. The as-deposited LSFCM coating was about 250 µm in thickness. Although no major cracks were observed, Figure 1 reveals residual porosity and micro-cracks in the coating throughout the cross-section.

### EXAMPLE 2 - Deposition of LSFCM coating by Mach I plasma spraying

LSFCM coating was deposited on a stainless steel substrate using a Mach I-mode supersonic plasma spraying. The sprayed powder was fed into the torch in the same way as described in the example 1. A Mach I mode of plasma spraying was set up as follows:

### Plasma medium:

40 slm Ar with 21 slm He.

### Plasma torch and power:

Mach I mode of Praxair SG-100 plasma torch with a power of 900 amps, 34 volts and 30 Kilowatts.

### Powder and feed:

LSFCM powder (20 µm agglomerates) is prepared by Praxair Specialty Ceramics, Inc. Powder was fed at 10 mm upstream from the torch exit with 5.5 slm Ar carrier gas at 40 psi and with a 3.0 rpm setting of Praxair powder feeder (equals approximately to 18 grams/minute feed rate).

### Torch manipulation:

40 passes at a scan of 500 mm/second in a 3 mm step ladder pattern horizontal to the substrate and at a distance of 90 mm from the substrate.

Figure 2 shows a cross-sectional photomicrograph of a LSFCM film deposited on a stainless steel substrate by Mach I-mode plasma spraying. The LSFCM coating formed was about 350 µm in thickness. The coating density was improved by the increase of the velocity of plasma, with minimal microcracks and low residual porosity observed in the cross-section.

### EXAMPLE 3 - Deposition of LSFCM coating by Mach II plasma spraying

LSFCM coating was deposited on a stainless steel substrate using a Mach II-mode supersonic plasma spraying. The sprayed powder was fed into the torch in the same way as described in the example 1. A Mach II mode of plasma spraying was set up as follows:

### Plasma medium:

105 slm Ar with 40 slm He.

### Plasma torch and power:

Mach II mode of Praxair SG-100 plasma torch with a power of 950 amps, 73 volts and 69 Kilowatts.

### Powder and feed:

20 micron agglomerate LSFCM powder from Praxair Specialty Inc.

Feed at 10 mm upstream from the torch exit with 10 slm Ar carrier gas at 100 psi and with a 3.0 rpm setting of Praxair powder feeder (equals approximately to 18 grams/minute feed rate).

### Torch manipulation:

40 passes for steel substrate and 6 passes for porous MgO substrate both at a scan of 500 mm/second in a 3 mm step ladder pattern horizontal to the substrate and at a distance of 90 mm from the substrate.

Figure 3a shows a cross-sectional photomicrograph of 240 µm LSFCM film prepared on a stainless steel substrate. The image was taken under the same magnification as shown in Figures 1 and 2. As compared to the films prepared by subsonic mode (Figure 1) and Mach I (Figure 2), the LSFCM film by Mach II is ultra-highly dense and crack-free. Figure 3b shows a cross-sectional SEM of the LSFCM film fabricated by Mach II on a porous magnesium oxide (MgO) substrate. As shown in Figure 3b, the dense LSFCM film of ∼50 µm (middle, brighter) was between the porous MgO substrate (lower, gray) and epoxy (upper, dark). The epoxy was used for mounting the sample. Figure 3b indicates that the ultra-highly dense LSFCM film was able to deposit on the porous MgO substrate (∼34% porosity).

It should be pointed out that the as-sprayed LSFCM film by Mach II-mode plasma spraying looks not only dense and crack-free but also uniform with a good bonding between the film and the substrate. XRD shows the as-sprayed film is a single-phase perovskite structure (Figure 4), which is ideal of the film as an OTM. ICP analysis (Figure 5) also shows that the as-sprayed LSFCM film reveals substantially the same composition as compared to that of the feed powder.

### EXAMPLE 4 - Deposition of La_{.05}Sr_{.95}CoO₃ (LSC) coating by Mach II plasma spraying

LSC coating was deposited on a porous LSC-m (LSC+20 wt.% Pd/Ag) using a Mach II-mode supersonic plasma spraying. The sprayed powder was fed into the torch in the same way as described in the example 1. A Mach II mode of plasma spraying was set up as follows:

### Plasma medium:

105 slm Ar with 40 slm He.

### Plasma torch and power:

Mach II mode of Praxair SG-100 plasma torch with a power of 950 amps, 73 volts and 69 Kilowatts.

### Powder and feed:

15 micron LSC powder from Praxair Specialty Inc.

Feed at 10 mm upstream from the torch exit with 10 slm Ar carrier gas at 100 psi and with a 3.0 rpm setting of Praxair powder feeder (equals approximately to 18 grams/minute feed rate).

### Torch manipulation:

Eight passes at a scan of 500 mm/second in a 3 mm step ladder pattern horizontal to the substrate and at a distance of 90 mm from the substrate.

Figure 6 shows a cross-sectional SEM of the LSC film deposited on a porous LSC-m substrate. The LSC film was dense and crack-free with a thickness of about 50 µm. The high temperature permeation tests of LSC/LSC-m composite disc was performed at 900°C using different N₂/O₂ mixtures as feed gases and He as a purge gas. An O₂ flux of 9 sccm/cm² was obtained at 900°C for a 50 µm LSC film on a porous LSC-m substrate (1.7 mm) using a 80%O₂/N₂ feed gas. Figure 7 shows flux performance and the stability of plasma sprayed LSC composite disc at 900°C using air as a feed gas. After being tested for 500 hrs, the plasma-sprayed coating remained intact and good bonding with the substrate.

### EXAMPLE 5 - Deposition of dual phase mixed conductors with ceramic 2nd phase by supersonic plasma spraying - LSFCM with 50 wt. % Ce_{0.8}Gd₀.₂O₂ (LSFCM-50CGO)

The LSFCM-50CGO coating was deposited on a porous LSFCM-50CGO substrate using a Mach II-mode supersonic plasma spraying. The sprayed powder was fed into the torch in the same way as described in the example 1. A Mach II mode of supersonic plasma spraying was set up as follows:

### Plasma medium:

95 slm Ar with 45 slm He.

### Plasma torch and power:

Mach II mode of Praxair SG-100 plasma torch with a power of 900 amps, 58 volts and 52 Kilowatts.

### Powder and feed:

20 µm agglomerate powder of LSFCM mixed with 50 wt.% of CGO from Praxair Specialty Inc. Feed at 10 mm upstream from the torch exit with 10 slm Ar carrier gas at 100 psi and with a 3.0 rpm setting of Praxair powder feeder (equals approximately to 18 grams/minute feed rate).

### Torch manipulation:

Eight passes at a scan of 500 mm/second in a 3 mm step ladder pattern horizontal to the substrate and at a distance of 90 mm from the substrate.

Figure 8 shows a cross-sectional SEM of the LSFCM-50CGO film deposited on a porous LSFCM-50CGO substrate. The LSFCM-50CGO film was dense and crack-free with a thickness of about 100 µm. Higher SEM observations reveal that both LSFCM and CGO deposits are uniformly distributed in the coating. The film was also well bonded with the porous substrate, as shown in Figure 8.

### EXAMPLE 6 - Deposition of dual phase mixed conductors with metallic 2nd phase by supersonic plasma spraying - Ce_{0.8}Gd_{0.2}O₂ with 40 wt.% of Pd (CGO-Pd)

The CGO-Pd coating was deposited on a porous LSFCM-50CGO substrate using a Mach II-mode supersonic plasma spraying. The sprayed powder was fed into the torch in the same way as described in the example 1. A Mach II mode of plasma spraying was set up as follows:

### Plasma medium:

95 slm Ar with 45 slm He.

### Plasma torch and power:

Mach II mode of Praxair SG-100 plasma torch with a power of 900 amps, 58 volts and 52 Kilowatts.

### Powder and feed:

20 micron agglomerate powder of CGO mixed with 40 wt% of Pd from Praxair Specialty Inc. Feed at 10 mm upstream from the torch exit with 10 slm Ar carrier gas at 100 psi and with a 3.0 rpm setting of Praxair powder feeder (equals approximately to 18 grams/minute feed rate).

### Torch manipulation:

Twelve passes at a scan of 500 mm/second in a 3 mm step ladder pattern horizontal to the substrate and at a distance of 90 mm from the substrate.

Figure 9 shows a cross-sectional SEM of the CGO-Pd film deposited on a porous LSFCM-50CGO substrate. The CGO-Pd film was dense and crack-free with a thickness of about 200 µm. Higher SEM observations reveal that both CGO and Pd deposits are uniformly distributed in the coating. The film was also well bonded with the porous substrate, as shown in Figure 9.

### EXAMPLE 7 (not part of the invention) - Deposition of Ce_{0.8}Gd_{0.2}O₂ (CGO) ionic conducting film by subsonic plasma spraying using a nanocrystalline agglomerate powder

The CGO coating was prepared by subsonic-mode plasma spraying on a porous LSFCM-50CGO substrate. The sprayed-dried CGO powder was fed into the torch in the same way as described in the example 1. A subsonic mode of plasma spraying was set up as follows:

### Plasma medium:

45 slm Ar with 21 slm He, where slm is standard liters per minutes.

### Plasma torch and power:

Subsonic mode of Praxair SG-100 plasma torch with a power of 900 amps, 29 volts and 32 Kilowatts.

### Powder and feed:

The CGO powder (20 µm agglomerates of 200 nm primary particles) is prepared by Praxair Specialty Ceramics, Inc. Powder was feed at 10 mm upstream from the torch exit with 4 slm Ar carrier gas at 30 psi and with a 3.0 rpm setting of Praxair powder feeder (equals approximately to 18 grams/minute feed rate).

### Torch manipulation:

Fourteen passes at a scan of 500 mm/second in a 3 mm step ladder pattern horizontal to the substrate and at a distance of 90 mm from the substrate.

Figure 10 shows a cross-sectional SEM of the CGO film deposited on a porous LSFCM-50CGO substrate. The film was dense and crack-free with a thickness of about 100 µm. The film was uniform in thickness with no lamellar structure detected and was well bonded with the porous substrate.

### EXAMPLE 8 (not part of the invention) - Deposition of porous La_{.2}Sr_{.8}Fe.₇₉Cr.₂Mg.₀₁O₃ (LSFCM) coating by subsonic plasma spraying

The porous LSFCM coating was prepared by subsonic-mode plasma spraying on a porous LSFCM-m (LSFCM + 20 wt.% Pd/Ag). The sprayed-dried LSFCM powder used in this example was first blended with 15 wt.% graphite (pore former) and then fed into the plasma spray gun vertically via Ar carrier gas through a Praxair powder feeder. A subsonic mode of plasma spraying was set up as follows:

### Plasma medium:

40 slm Ar with 16 slm He, where slm is standard liters per minutes.

### Plasma torch and power:

Subsonic mode of Praxair SG-100 plasma torch with a power of 800 amps, 35 volts and 28 Kilowatts.

### Powder and feed:

LSFCM powder (20 µm agglomerates) is prepared by Praxair Specialty Ceramics, Inc. The powder was premixed with 15 wt.% graphite and then fed at 10 mm upstream from the torch exit with 4 slm Ar carrier gas at 30 psi and with a 3.0 rpm setting of Praxair powder feeder (equals approximately to 18 grams/minute feed rate).

### Torch manipulation:

Sixteen passes at a scan of 500 mm/second in a 3 mm step ladder pattern horizontal to the substrate and at a distance of 90 mm from the substrate.

By selecting an appropriate set of plasma spraying parameters and using the powder blended with certain amount of pore former (graphite), a porous OTM coating can be obtained. Figure 11 shows a cross-sectional photomicrograph of porous LSFCM coating deposited on a porous LSFCM-m substrate. A porosity of more than 30% with the pore sizes of up to 10 µm was obtained on the LSFCM coating. It should be pointed out that this process can be easily modified to obtain a porosity >50% and a pore size >50 µm of the porous coating depending on spraying conditions and pore former used.

## Claims

1. A method for fabricating a mixed ionic and electronic conducting membrane layer comprising: feeding a single phrase composition made up of agglomerates of particles to a plasma torch or gun, the particles within the agglomerates comprising a mixed ionic and electronic conducting material and having a particle size of less than 1000 nm; spraying said single phase composition in the presence of an inert gas as a plasma medium, at a supersonic speed from said plasma torch or gun, and depositing said single phase composition onto a porous or dense substrate in order to provide the mixed ionic and electronic conducting membrane layer in the form of a microcrack-free ceramic coating on the substrate.

2. The method of claim 1 wherein said plasma medium comprises argon, helium, or a combination thereof.

3. The method of claim 1 wherein said particles comprise perovakite particles.

4. The method of claim 1 wherein said particles comprise fluorite particles.

5. The method of claim 1 wherein the particle size within the agglomerats is less than 500 nm.

6. The method of claim 5 Wherein the particle size within the agglomerats is less than 200 nm.

## Patentansprüche

1. Verfahren zum Herstellen einer gemischt Ionen und Elektronen leitenden Membranlage, bei welchem: eine Einzelphasenzusammensetzung, die aus Aklumaraten von Teilchen hergestellt wurde, einem Plasmabrenner oder einer Plasmakanone zugeführt wird, wobei die Teilchen innerhalb den Agglomeraten einen gemischt Ionen und Elektronen leitenden Werkstoff aufweisen und eine Teilchengröße von weniger als 1000 nm haben; die Einzelphasenzusammensetzung in Anwesenheit eines Inertgases als ein Plasmamedium bei Überschallgeschwindigkeit von dem Plasmabrenner oder der Plasmakanone verspritzt wird, und die Einzelphasenzusammensetzung auf ein poröses oder dichtes Substrat abgeschieden wird, um die gemischt Ionen und Elektronen leitende Membranlage in Form eines von mikroskopischen Sprüngen freien Keramiküberzugs auf dem Substrat bereitzustellen.

2. Verfahren gemäß Anspruch 1, bei welchem das Plasmamedium Argon, Helium oder eine Kombination derselben aufweist.

3. Verfahren gemäß Anspruch 1, bei welchem die Teilchen Perovskitteilchen aufweisen.

4. Verfahren gemäß Anspruch 1, bei welchem die Teilchen Fluoritteilchen aufweisen.

5. Verfahren gemäß Anspruch 1, bei welchem die Teilchengröße innerhalb der Agglomerate weniger als 500 nm beträgt.

6. Verfahren gemäß Anspruch 5, bei welchem die Teilchengröße innerhalb der Agglomerate weniger als 200 nm beträgt.

## Revendications

1. Procédé pour fabriquer une couche de membrane à conduction ionique électronique mixte, comprenant des étapes consistant : à amener une composition monophasique constituée d'agglomérats de particules à un chalumeau ou à un canon à plasma, les particules dans les agglomérats comprenant une matière à conduction ionique électronique mixte et ayant un diamètre de particules inférieur à 1000 nm ; à pulvériser ladite composition monophasique en présence d'un gaz inerte comme milieu de formation de plasma, à une vitesse supersonique par ledit chalumeau ou canon à plasma, et à déposer ladite composition monophasique sur un substrat poreux ou dense afin de fournir la couche de membrane à conduction ionique électronique mixte sous forme d'un revêtement céramique dépourvu de microfissures sur le substrat.

2. Procédé suivant la revendication 1, dans lequel ledit milieu de formation de plasma comprend l'argon, l'hélium ou une association de ceux-ci.

3. Procédé suivant la revendication 1, dans lequel lesdites particules comprennent des particules de perovskite.

4. Procédé suivant la revendication 1, dans lequel lesdites particules comprennent des particules de fluorite.

5. Procédé suivant la revendication 1, dans lequel le diamètre de particules dans les agglomérats est inférieur à 500 nm.

6. Procédé suivant la revendication 5, dans lequel le diamètre de particules dans les agglomérats est inférieur à 200 nm.
